# EUROPEAN PATENT APPLICATION

(11) **EP 4 667 191 A1**
(43) Date of publication of application: **24.12.2025**
(21) Application number: 24382655.9
(22) Date of filing: 17.06.2024
(51) Int. Cl.: B29C 64/393, B33Y 50/02, G06F 30/20

(54) **A COMPUTER-IMPLEMENTED METHOD FOR DETERMINING A PATH FOR SEMISOLID EXTRUSION-BASED 3-D PRINTING**

(71) Applicant: Fundacion Centro de Tecnologias de Interaccion Visual y comunicaciones Vicomtech, 20009 San Sebastian (ES)
(72) Inventor: CORTÉS, Camilo, 20009 San Sebastian (GIPUZKOA) (ES); BERASATEGUI, Garat, 20009 San Sebastian (GIPUZKOA) (ES); ZELAIA, Maialen, 20009 San Sebastian (GIPUZKOA) (ES); MEJIA, Daniel, 20009 San Sebastian (GIPUZKOA) (ES); MORENO, Aitor, 20009 San Sebastian (GIPUZKOA) (ES)
(74) Representative: Balder IP Law, S.L.

(57) **Abstract**

The invention relates to a computer-implemented method for determining a path for 3-D printing, by extrusion of semisolid material, a slice of a 3-D model, the method comprising: classifying received polygons as parent and child, wherein a polygon is classified as parent polygon of a child; and determining a path for 3-D printing the slice, the path comprising deposition subpaths (i1, i2, p1) delimited by the polygons, and the path comprising travel subpaths; the step of determining the path comprising:
∘ for each parent polygon: configuring the path to perform the deposition subpath(s) delimited by the child(ren) (q111) of the parent polygon (q11), and to perform the deposition subpath delimited by the parent polygon after performing the deposition subpath(s) delimited by the children; and
∘ minimizing a sum of lengths of intersections of the travel subpaths with the 3-D portions of the slice.

## Description

### TECHNICAL FIELD

The present invention is encompassed within the field of 3-D printing. In particular within the field of determination of printhead paths for 3-D printing by extruding semisolid material, for example, biocompatible material (e.g., bioinks), edible substances or concrete.

### BACKGROUND

Extrusion-based 3-D printers configured to extrude semisolid material are known in the art. Examples of applications of extrusion-based 3-D printing are extrusion-based 3-D bioprinting, extrusion- of edible substances and extrusion of concrete. Tissue-like structures, which may later be used in medical applications or applications of tissue engineering 3-D, may be produced by using extrusion-based bioprinting. A translation of bioprinted living cellular constructs into clinical application may have to deal with several issues due to the complexity and the number of cells necessary to create functional organs.

It is also known in the art that extrusion based 3-D printers require calculation of a path to be completed by a printhead configured to extrude the material for printing a determined object. The calculation of the path comprises dividing a 3-D model of the object to be printed in slices. Each slice is a horizontal layer of the 3-D model.

It is known that quality of the printed object depends on features of the printing, such as, speed of the printed flow of material, speed of the printhead and accuracy of motion of the printhead. An issue of extrusion-based 3-D printing (more particularly, of 3-D bioprinting) is that extrusion is not immediately stopped upon sending a signal to stop extrusion. This means that material keeps flowing from a nozzle of the printhead during some time after receiving the stop signal. This flow may result in printing undesired portions of an object or may drag previously printed portions of the object thus worsening the printed object. This issue may be particularly severe for materials with low retractability or slow solidification. Some examples of extrusion-based 3-D printing which may be subjected to low retractability and slow solidification are: 3-D bioprinting, 3-D printing by extruding polymers, 3-D printing by extruding a ceramic material, 3-D printing by extruding concrete. In general, 3-D printing by extruding semisolid material is subjected to low retractability and slow solidification. This issue has been made less severe for some cases using retraction of the material to be extruded upon receiving the signal to stop printing the material. This retraction may decrease the amount of material undesirably extruded. However, this solution has limitations. For example, there are materials that have low retractability and/or that require long time for solidifying after having been extruded.

Therefore, it would be desirable to enhance quality and appearance of objects printed by an extrusion-based 3-D printer configured to extrude semisolid material.

### SUMMARY

A first aspect of the disclosure relates to a computer-implemented method for determining paths for 3-D printing, by extrusion of semisolid material, slices of a 3-D model (e.g., all slices or just some slices of a 3-D model of a complete object to be printed), and for transforming the determined paths into instructions; the instructions being executable by a 3-D printer for extruding semisolid material; the method comprising performing the following for each slice of the slices of the 3-D model:
- receiving polygons defining boundaries of 3-D portions of the slice of the 3D-model;
- classifying the received polygons as parent and child, wherein a polygon is classified as parent polygon of a child polygon if any one of the following conditions is met:
   ∘ the parent polygon encloses the child polygon, and there is only one received polygon enclosing the child polygon; and
   ∘ there is more than one received polygon enclosing the child polygon, the parent polygon encloses the child polygon and the parent polygon has less area than the remaining received polygon(s) enclosing the child polygon;
- determining a path for 3-D printing the slice, the path comprising deposition subpaths delimited by the polygons, and the path comprising travel subpaths, each travel subpath of the travel subtpaths connecting an end of a deposition subpath to a beginning of another deposition subpath or connecting an initial location of a printhead to a beginning of an initial deposition subpath of the deposition subpaths; the step of determining the path comprising:
   ∘ for each parent polygon: configuring the path to perform the deposition subpath(s) delimited by the child(ren) of the parent polygon, and to perform the deposition subpath delimited by the parent polygon after performing the deposition subpath(s) delimited by the child(ren) and before performing any other deposition subpath of the deposition subpaths not yet performed according to the path; and
   ∘ minimizing a sum of lengths of intersections of the travel subpaths with the 3-D portions of the slice.

In some embodiments, the instructions into which the paths are transformed are written, for example, in G-code.

In some embodiments, the instructions into which the paths are transformed are written in a programming language different than G-code.

Some particular examples of extrusion-based 3-D printing to which the method may be applied are: 3-D bioprinting, 3-D printing by extruding plastic, 3-D printing by extruding a ceramic material and 3-D printing by extruding concrete.

In a path of a printhead of the 3-D printer there are deposition subpaths (subpaths in which it is intended that the printhead extrudes material) and travel subpaths (subpaths in which it is intended that the printhead does not extrude material).

By performing the deposition from the inside of the object to the outside of the object (i.e., by performing the deposition subpaths delimited by the child polygons prior to the deposition subpaths delimited by the respective parent polygons) errors in the printed object caused by the undesirable extrusion of material have been minimized because the travel subpaths of a slice can be arranged so that intersections of the travel paths with deposition subpaths (more particularly, with deposition subpaths already performed) of the slice are minimized and, in some slices, reduced to zero. This is possible, at least in part, because the travel paths can be arranged to go around the 3-D portions of the slice of the inner depositions already performed.

The 3-D portions of the slice are the portions of the slice which comprise material (i.e., which are not voids).

In this way, the sum of lengths of intersections of the travel subpaths with the 3-D portions of the slice and, particularly, with the 3-D portions of the slice already printed by the time the respective travel subpaths are performed, can be minimized.

The minimization of the sum of lengths of intersections of the travel subpaths with the 3-D portions may be achieved by determining the path by solving an optimization problem for optimizing the path, the optimization problem comprising a cost function comprising a penalty parameter for penalizing length of intersection of the travel subpaths with the 3-D portions of a slice (e.g., intersection of the travel subpaths with the 3-D portions of the slice already printed).

In some embodiments, the step of determining the path for 3-D printing further comprises a restriction wherein at least one of:
- the path only passes once along a perimeter of each polygon of the polygons; and
- a sum of a length of each travel subpath of the travel subpaths is minimized.

Passing only once along a perimeter of each polygon allows decreasing a likelihood that the printhead will damage a boundary surface of the 3-D object.

Minimizing a length of the sum of the travel subpaths of the path allows decreasing a likelihood that the printhead damages the 3-D object because the length of the travel subpaths during which a contact of the printhead (e.g., the nozzle or material accumulated near the nozzle) with the 3-D object and/or undesired deposition of material may occur is minimized. The minimization of the sum of a length of each travel subpath of the travel subpaths may be achieved by determining the path by solving an optimization problem for optimizing the path, the optimization problem comprising a cost function comprising a penalty parameter for increasing a penalty for higher sum of lengths of the travel subpaths.

In some embodiments, the received polygons comprise polygons not having any parent polygon, and the step of determining the path comprises ordering the deposition subpaths delimited by the polygons not having any parent polygon, wherein the ordering comprises:
- calculating a centroid of each polygon of the polygons not having any parent polygon,
- obtaining the order by applying a nearest neighbor algorithm to the centroids and to an initial location of a printhead.

In this way, the polygon to be printed first is the polygon having a centroid closest to the initial location of the printhead. The polygon to be printed second is the polygon, not already printed, having a centroid closest to the centroid of the first polygon. If there are more than two polygons in the slice, the polygon to be printed third is the polygon, not already printed, having a centroid closest to the second polygon. If there are more than two polygons in the slice, the polygon to be printed last is the polygon, of the two polygons not already printed, which does not have the closest centroid to the polygon printed the second-to-last.

This way of ordering the deposition subpaths allows solving the problem of performing the deposition subpaths in an optimal or close to optimal way (e.g., locally optimal solution) without requiring as many computational resources as to guarantee that the solution is always optimal. Other ways of ordering the deposition subpaths are possible, although some of the other ways may provide less optimal paths (e.g., longer paths) and/or require more computing resources.

In some embodiments, the step of determining the path has a restriction wherein a travel subpath between two deposition subpaths starts at a vertex of the polygon delimiting one of the deposition subpaths and/or ends at a vertex of the polygon delimiting the other deposition subpath. Choosing vertexes of polygons as start and/or end points allows minimizing computation resources required for determining the path because it is not required to compute the points of the segments of the polygons to determine a travel path between the polygons. Instead, merely vertexes of the polygons are computed.

In some embodiments, the step of determining the path has a restriction wherein each travel subpath between two deposition subpaths starts at a vertex of the polygon delimiting one of the deposition subpaths, ends at a vertex of the polygon delimiting the other deposition subpath and, upon the start vertex of the travel subpath not being the closest vertex to the polygon delimiting the other deposition subpath, goes along a safe outline of the start polygon from the point of the safe outline of the start vertex to a point of a safe outline of the closest vertex of the start polygon.

A safe outline of a polygon is a line close to at least a portion of a perimeter of the polygon. The safe outline may be inside the polygon or outside the polygon, but a safe outline cannot connect the inside of the polygon with the outside of the polygon. For example, the safe outline may have a portion parallel to the portion of the perimeter of the polygon so that each point of the portion of the perimeter of the polygon (which may include one or more vertexes of the polygon) has a corresponding point in the safe outline. The safe outline is safe in the sense that allows travelling at a distance from a perimeter of the respective polygon, thereby avoiding travelling along the perimeter of a polygon of the slice.

A distance between a centerline of the safe outline of a polygon and a centerline of the perimeter of the polygon may be of a value C multiplied by the diameter of the orifice of the tip of the nozzle of the 3D printer, wherein the 3D printer extrudes the material through the orifice. The value C is of at least 1.2 or 1.5. In this way, the nozzle is at a sufficient distance from the perimeter of the polygon, so that material undesirably deposited in the perimeter of the polygon is minimized. A maximum value C may be dependent on distance between the polygons so that the safe outline of a polygon does not intersect the perimeter of another polygon and is not closer to the perimeter of another polygon than to the perimeter of its polygon, for example, the value C may be of at most 1.7 or 2. Normally it is desirable that the safe outline is as close as possible to its polygon, while minimizing the undesirably deposited material, so that the time required to print is minimized. Preferably, the perimeters of the polygons and the safe outlines are possible locations of the center of the orifice of the tip of the nozzle.

In some embodiments, the safe outline of each polygon does not intersect the safe outline of any other polygon nor the perimeter of any other polygon. In this way, the method does not require dealing with said intersections (for example, by adapting the travel subpath which goes through said intersection(s)) to prevent the nozzle from being too close to the another polygon in a travel subpath.

In some embodiments, the safe outline of a polygon intersects the safe outline of another polygon, hence the nozzle may be too close to the another polygon along a travel path that goes, from the polygon to the another polygon, through the intersection point. These cases may be solved by adapting the travel subpath so that the travel subpath does not continue along the safe outline of the polygon upon reaching the intersection point, but goes through an alternative subpath that connects the intersection point to a vertex of the another polygon without intersecting a perimeter of any polygon prior to reaching the vertex of the another polygon. In some embodiments, in which it is not possible to find such alternative subpath, and the travel subpath must intersect perimeter(s) of polygon(s) to reach the another polygon, the nozzle is raised along the travel subpath (e.g., raised some centimeters), thus allowing minimizing damage to the 3D printed product; and preferably the number of intersections with the perimeter(s) of polygon(s) along the travel subpath is kept at the minimum necessary to reach the another polygon.

In some embodiments, the safe outline of a polygon delimiting, in an outer manner with respect to an infill, the infill is outside of the polygon; and wherein the safe outline of a polygon delimiting, in an outer manner with respect to a void, the void is inside of the polygon.

Thereby, the safe outline is outside or inside the polygon so that the safe outline does not intersect with the area into which it is intended to deposit material by printing.

Moving to or from a safe outline instead of moving to/from a vertex of a polygon allows minimizing the number of passes of the printhead over vertexes of polygons. Note that in many cases of extrusion-based 3-D printing more material is deposited in vertexes of polygons than in other portions of the polygons, and hence it may be more prejudicial for the 3-D printed object that the printhead performs travel subpaths through the vertexes of the polygons instead of through other points of the polygons. It may be more prejudicial because the likelihood of dragging already deposited material may be higher and the likelihood of depositing a relatively large undesired amount of material increases. By making the travel subpaths go from a point of a safe outline of a polygon (e.g., a safe outline of a vertex of the polygon) to a point of a safe outline of another polygon (e.g., a safe outline of a vertex of the another polygon) the chances of going through vertexes of polygons decreases.

In some embodiments, the printhead (e.g., the nozzle), during performance of the travel subpaths going through deposition subpaths already performed, is above the positions of the printhead (e.g., the nozzle) during performance of the deposition subpaths. Thereby, the chances that the travel subpaths damage already printed material in the slice of the 3-D printed object are decreased.

In some embodiments, the printhead (e.g., the nozzle), during performance of the travel subpaths, is above the positions of the printhead (e.g., the nozzle) during performance of the deposition subpaths. Thereby, the chances that the travel subpaths damage already printed material in the slice or previous slices of the 3-D printed object are decreased.

In some embodiments, the printhead (e.g., the nozzle), during performance of the travel subpaths going through deposition subpaths already performed, is above the positions of the printhead (e.g., the nozzle) during performance of the travel subpaths going through deposition subpaths to be performed but not performed yet. This allows further decrease of damage of the printed 3-D object.

In some embodiments, the step of determining the path comprises determining a travel subpath connecting two polygons having a same parent polygon or two polygons not having any parent polygon, wherein the step of determining the travel subpath connecting the two polygons comprises detecting that a minimized subpath between the two polygons (e.g., s shortest path between the two polygons or a shortest path between vertexes of the two polygons) passes through a third polygon of the received polygons other than the two polygons and, upon detecting that the minimized subpath passes through the third polygon, defining a travel subpath connecting the two polygons and passing along a safe outline of the third polygon.

In this way, a travel subpath connecting the two polygons is prevented from going through the third polygon.

In some embodiments, the step of determining the path comprises configuring, for a polygon of the polygons not having any parent polygon and being a parent polygon of at least one of the polygons, a travel subpath of the path by:
a) choosing a child polygon of the parent polygon, wherein if the parent polygon has more than one child polygon, the chosen child polygon has a centroid closest to a determined location point of a printhead;
b) adding, to the travel subpath, a subpath connecting the location point of a printhead to a point of a safe outline of the parent polygon (e.g., a safe outline of the vertex of the parent polygon), and connecting the point of the safe outline of the parent polygon to a point of the chosen child polygon (e.g., a vertex of the chosen child polygon closest to the point of the safe outline of the parent polygon);
c) upon determining that the latest chosen child polygon is not a parent polygon, not adding more subpaths to the travel subpath; upon determining that the latest chosen child polygon is a parent polygon:
d) assigning the status of parent polygon to the latest chosen child polygon, assigning the status of location point of a printhead to the point of the chosen child polygon in b) and performing a);
e) adding, to the travel subpath, a subpath connecting the point of the chosen child polygon in b) to a point of a safe outline of the parent polygon assigned in d), and connecting the point of the safe outline of the parent polygon to a point of a safe outline of the latest chosen child polygon, and connecting the point of a safe outline of the latest chosen child polygon to a point of the latest chosen child polygon; and
f) upon determining that the latest chosen child polygon is not a parent polygon, not adding more subpaths to the travel subpath; upon determining that the latest chosen child polygon is a parent polygon: repeating a), b) and c), wherein the status of parent polygon is assigned to the latest chosen child polygon, and the status of location point of a printhead is assigned to the point of the latest chosen child polygon of e);
wherein in b), if the location point of a printhead is a point of a safe outline of the parent polygon, not performing the addition of a subpath connecting the location point of a printhead to a point of a safe outline of the parent polygon.

Choosing a child polygon having a centroid closest (i.e., closer than the centroids of the rest of the child polygons of the respective parent polygon) to a determined location of a printhead allows minimizing a length that has to be completed by the printhead from the determined location of the printhead to a child polygon. Choosing said child polygon follows a criterion which allows an appropriate balance between reducing computing resources required to determine the path and determining an optimum path or a close to optimum path (e.g., a minimized path). The child polygon could be chosen according to another criterion, which may require more or less computing resources and/or result in a longer or shorter path.

The determined location of the printhead may, in the first performance of a), be an initial location of the printhead (i.e., a location from which the printhead begins moving to print the slice, of the 3-D object, to be printed first).

Upon determining that the latest chosen child polygon is not a parent polygon in any of c) and f), the deposition subpath delimited by the latest chosen child polygon may be performed.

This way of determining the path allows reaching a child not being a parent, so that the deposition subpath delimited by the child can be performed prior to the deposition subpath delimited by the parent of the child.

Upon performing the deposition subpath of said child, the method may proceed to sibling(s) of the child if the child has sibling(s). The sibling(s) of a determined polygon is/are polygon(s) of the received polygons having the same parent as the determined polygon.

In some embodiments, at least two of the polygons are sibling polygons; wherein the polygon(s) not having any parent polygon is/are external polygon(s), the child(ren) of external polygon(s) is/are internal polygon(s), and the child(ren) of internal polygon(s) is/are external polygon(s); the method comprises configuring, for a determined polygon having at least one sibling polygon, a travel subpath of the path by:
choosing a sibling polygon of the determined polygon to be printed earlier than the chosen sibling polygon, wherein if the determined polygon has more than one sibling polygon, the chosen sibling polygon has a centroid closest (i.e., closer than the centroids of the rest of the sibling polygons of the respective determined polygon) to the determined polygon (e.g., closer to the centroid of the determined polygon); and
if the chosen sibling is an external polygon, adding, to the travel subpath, a subpath connecting a point of the determined polygon to a point of a safe outline of the determined polygon, connecting the point of the safe outline of the determined polygon to a point of a safe outline of the sibling polygon, and connecting the point of the safe outline of the sibling polygon to the point of the sibling polygon; and
if the chosen sibling is an internal polygon, adding, to the travel subpath, a subpath connecting a point of the determined polygon to a point of a safe outline of the determined polygon, and connecting the point of the safe outline of the determined polygon to a point of the sibling polygon.

Thereby, the travel subpath to the respective sibling polygon may be performed after having performed a deposition subpath delimited by the respective polygon.

Upon determining that the sibling polygon is not a parent polygon, a deposition subpath delimited by the sibling polygon may be performed (since the sibling polygon is not a parent, it has not any child delimiting a polygon which should be previously printed).

The characterization of a polygon as being external or internal is used in the present disclosure for the sake of conciseness; wherein external refers to polygons not having any parent polygon and to children of internal polygons; and wherein internal refers to children of external polygons. In general, external polygons delimit, in an outer manner with respect to an infill, the infill; and internal polygons delimit, in an outer manner with respect to a void, the void.

In some embodiments, the polygon(s) not having any parent polygon is/are external polygon(s), the child(ren) of external polygon(s) is/are internal polygons, and the child(ren) of internal polygon(s) is/are external polygon(s); the step of determining the path comprises configuring, for a child polygon of the polygons not having any child polygon nor any sibling polygon, a travel subpath of the path by:
if the child polygon is an external polygon, adding, to the travel subpath, a subpath connecting a point of the child polygon to a point of a safe outline of the child polygon, connecting the point of the safe outline of the child polygon to a point of a safe outline of the parent polygon, connecting the point of the safe outline of the parent polygon to a point of the parent polygon; and
if the child polygon is an internal polygon, adding, to the travel subpath, a subpath connecting a point of the child polygon to a point of a safe outline of the child polygon, and connecting the point of the safe outline of the child polygon to a point of the parent polygon.

Thereby, the travel subpath to the respective parent polygon may be performed after having performed the deposition subpaths delimited by the child(ren) of the respective parent.

The step of determining the path may further comprise configuring the path to comprise a deposition subpath delimited by the respective parent polygon upon reaching the point of the respective parent polygon.

In some embodiments, the step of determining the path comprises defining at least one of the deposition subpaths being an infill subpath for printing an infill delimited at an inner side by a polygon of the polygons and delimited at an outer side by another polygon of the polygons, wherein the infill subpath starts and ends at a same point closer to the polygon delimiting the inner side than to the polygon delimiting the outer side.

In this way the portion of the infill closer to the polygon delimiting the inner side is deposited prior to the portion of the infill closer to the polygon delimiting the outer side.

In some embodiments, the step of determining the path comprises including, in the path, a deposition subpath for printing the polygon delimiting the outer side of the infill, and configuring the path to perform the deposition subpath of the polygon delimiting the outer side of the infill after performing the deposition subpath of the infill and before performing any other subsequent deposition subpath.

Thereby, the infill is deposited prior to performing the deposition subpath of the polygon delimiting the outer side of the infill.

In some embodiments, the path does not comprise any deposition subpath for printing a polygon delimiting the infill. In this way, not any deposition subpath of a polygon delimiting the infill is performed.

A second aspect of the disclosure relates to a computer program product that has instructions which, when the program is executed by at least one computing device, cause the at least one computing device to carry out the method of the first aspect of the disclosure.

A third aspect of the disclosure relates to an extrusion-based 3-D printer configured to extrude semisolid material, the extrusion-based 3-D printer being configured to execute the instructions obtained according to the first aspect of the disclosure for performing the paths determined according to the first aspect of the disclosure.

Similar advantages as those described for the first aspect of the disclosure may also be applicable to the second and third aspects of the disclosure.

### BRIEF DESCRIPTION OF THE DRAWINGS

To complete the description and to provide for a better understanding of the disclosure, a set of drawings is provided. Said drawings form an integral part of the description and illustrate embodiments of the disclosure, which should not be interpreted as restricting the scope of the disclosure, but just as examples of how the disclosure can be carried out. The drawings comprise the following figures:
Figure 1 shows a diagram of a method according to some embodiments of the disclosure.
Figure 2 shows travel subpaths between polygons of a slice according to some embodiments of the disclosure.
Figures 3 discloses a system according to some embodiments of the disclosure.
Figure 4 shows travel subpaths between polygons of a slice according to some embodiments of the disclosure.
Figure 5 shows polygons of a slice according to some embodiments of the disclosure.
Figure 6 shows parent-child relationship between polygons according to some embodiments of the disclosure.
Figure 7 shows safe outlines of polygons according to some embodiments of the disclosure.
Figures 8 to 16 show subpaths performed according to some embodiments of the disclosure.
Figure 17 shows a determined path of a slice according to some embodiments of the disclosure.
Figure 18 shows a comparison of performance of the method according to some embodiments of the present disclosure with performance of other methods for determining the path.

### DETAILED DESCRIPTION

The following description is not to be taken in a limiting sense but is given solely for the purpose of describing the broad principles of the invention. Embodiments of the invention will be described by way of example, with reference to the above-mentioned drawings.

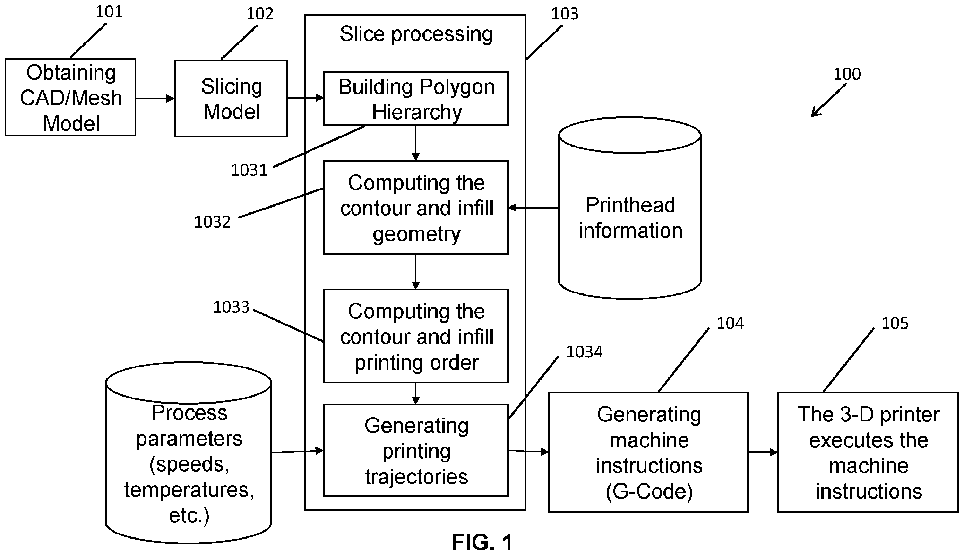

Figure 1 shows a diagram of an example of a method 100 in which the determined path and the transformation of the path into instructions are performed according to the present disclosure.

In step 101 of the method 100 a CAD or mesh model of an object that is to be 3-D printed is obtained (e.g., imported). In step 102, the model is sliced thereby obtaining slices of the model. Step 103 is performed for each slice of the obtained slices. In substep 1031, polygons of the slice are classified as parent, child and sibling. In substep 1032, geometry of contours and infills of the polygons of the slice is computed. The computing of the contours and the infills may be based on features of the printhead that will print the object. In substep 1033, a printing order of the contours and infills is computed. In substep 1034, printing trajectories of the contours and the infills (i.e., a printing path of the slice) is generated. The generation of the printing trajectories may be based on process parameters, for example, speeds and temperatures of the printing. In step 104, the trajectories of all the slices are transformed into machine instructions (e.g., G-code). In step 105, the 3-D printer executes the machine instructions.

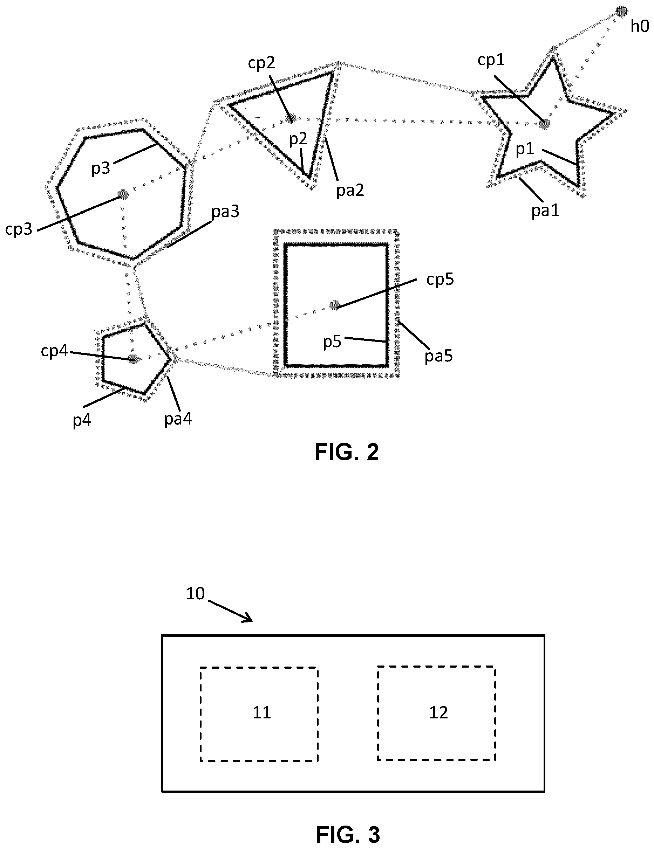

Methods according to the present disclosure may be carried out, for example, by the system 10 of figure 3. In particular, the determination of the paths (i.e., of the subpaths comprised by the path) and the transformation of the determined paths into the instructions executable by a 3-D printer may be performed with the system 10. The system 10 comprises at least one computing device 11. The at least one computing device 11 may be, for example, a CPU, a GPU, an FPGA, an ASIC, a personal computer, a laptop, etc. The system 10 comprises at least one memory 12, the at least one memory 12 may be part of the at least one computing device 11.

Extrusion-based 3-D printers for performing the path determined according to methods of the present disclosure may be configured to perform bioprinting (e.g., extrusion of cell-encapsulating hydrogels).

Extrusion-based 3-D printers for performing the path determined according to methods of the present disclosure may be configured to extrude hydrogels. For example, the extrusion-based 3-D printer may be configured to extrude bioinks (e.g., cell-encapsulating hydrogels). The bioink has a viscosity of, for example, at least 10 Pa s and at most 100 Pa s.

Some examples of the hydrogels are: agarose, alginate, collagen, fibrin, gelatin, hyaluronic acid (HA) and polyethylene glycol (PEG).

Semisolid material extruded by 3-D printers may be subsequently solidified by a change of temperature of the extruded material (e.g., in the case of PLA, i.e., Polylactic Acid) and/or by applying ultraviolet light to the material after extrusion thereof.

The system 10 may receive polygons defining boundaries of 3-D portions of a slice of a 3-D model. The system 10 may classify the received polygons as parent and child.

Figure 2 shows, with continuous black lines, polygons p1, p2, p3, p4, p5 to be printed, by an extrusion-based 3D printer for extruding semisolid material, according to a slice of a 3D model.

In figure 2, an initial location h0 of a printhead of the printer is outside of the polygons p1, p2, p3, p4, p5 of the slice. Figure 2 also shows with dotted lines safe outlines pa1, pa2, pa3, pa4, pa5 of the polygons p1, p2, p3, p4, p5 respectively. The polygons p1, p2, p3, p4, p5 do not have any parent polygon.

A path of the printhead is determined to print the slice. The path comprises deposition subpaths and travel subpaths. A way of minimizing a total length of the path comprises calculating a centroid of each polygon p1, p2, p3, p4, p5 of the slice and determining an order of printing the polygons of the slice based on the centroids and the initial location of the printhead. For example, a nearest neighbor algorithm is applied to the centroids and to the initial location of the printhead to order the printing of the polygons according to the path. In this way, since the centroid cp1 of the polygon p1 is the closest polygon centroid to the initial location h0 of the printhead, the polygon p1 is the polygon firstly printed by the printhead. Since the centroid cp2 of the polygon p2 is the closest polygon centroid to the centroid cp1, the polygon p2 is secondly printed. Since the centroid cp3 of the polygon p3 is the closest polygon centroid (of the polygons not already printed according to the path) to the centroid cp2, the polygon p3 is thirdly printed. Since the centroid cp4 of the polygon p4 is the closest polygon centroid (of the polygons not already printed according to the path) to the centroid cp3, the polygon p4 is fourthly printed. Since the centroid cp5 of the polygon p5 is the closest polygon centroid (of the polygons not already printed according to the path) to the centroid cp4, the polygon p5 is fifthly printed.

To minimize required computation resources, the determination of the path may be restricted to connect vertexes of the polygons, in particular, to connect the closest vertexes of the polygons to be connected.

The movement performed by the printhead between the polygons p1, p2, p3, p4, p5 is represented with a continuous gray line.

The printhead firstly moves from the location h0 to the closest vertex of the polygon p1 to the location h0. Then, the printhead performs the deposition subpath delimited by the star-shaped polygon p1.

Upon performing the deposition subpath delimited by the polygon p1, the printhead moves to the safe outline pa1, in particular, to the point of the safe outline of the vertex, of the polygon p1, closest to the location h0 (i.e., to the point, of the safe outline pa1, which is the closest to the latest point of the deposition subpath delimited by polygon p1). Then, the printhead moves along the safe outline pa1 of the polygon p1 to the point of the safe outline pa1 of the vertex of p1 closest to a vertex of p2. Then, the printhead moves to the closest vertex of the polygon p2 to a vertex of the polygon p1. Then, the deposition subpath delimited by polygon p2 is performed and the process performed for the polygon p1 is repeated for polygons p2, p3, p4 and p5. The movement performed from the end of the deposition subpath of the polygon p1 to the beginning of the deposition subpath of polygon p2 is a travel subpath.

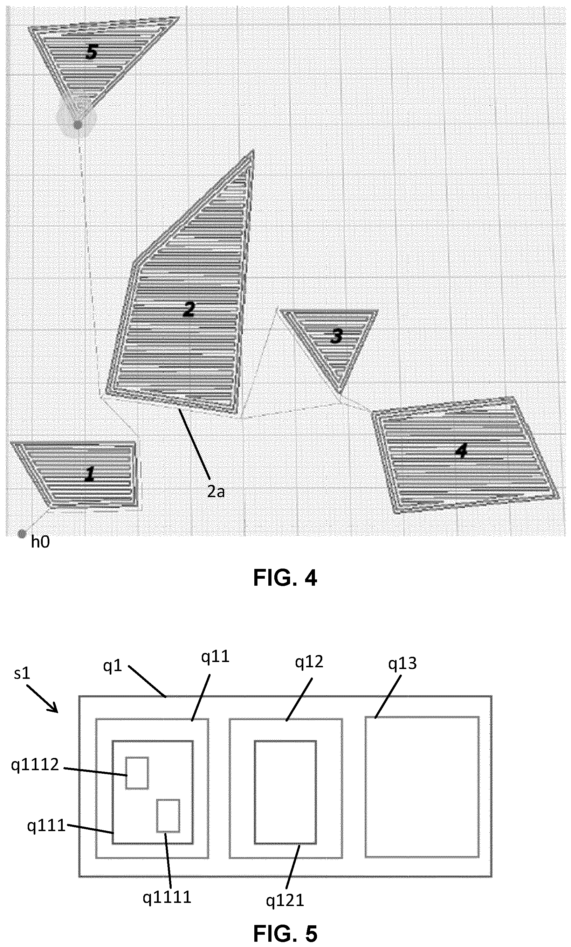

Figure 4 shows an example in which a path is determined according to the nearest neighbor algorithm previously described. Thereby, the path is configured to firstly perform the deposition subpath of polygon 1, then the deposition subpath of polygon 2, then the deposition subpath of polygon 3, then the deposition subpath of polygon 4 and then the deposition subpath of polygon 5. Thereby, the straight travel subpath connecting the polygon 4 to the polygon 5 would go through the polygon 2 because the polygon 2 is in the way of a connection from the closest vertex of polygon 4 to a vertex of polygon 5. However, the determination of the path is performed to make the travel subpath go along the safe outline 2a of polygon 2 instead of going through polygon 2. Thereby, since intersection of the travel subpath from polygon 4 to polygon 5 with polygon 2 is avoided, intersection between travel subpath and 3-D portions is minimized.

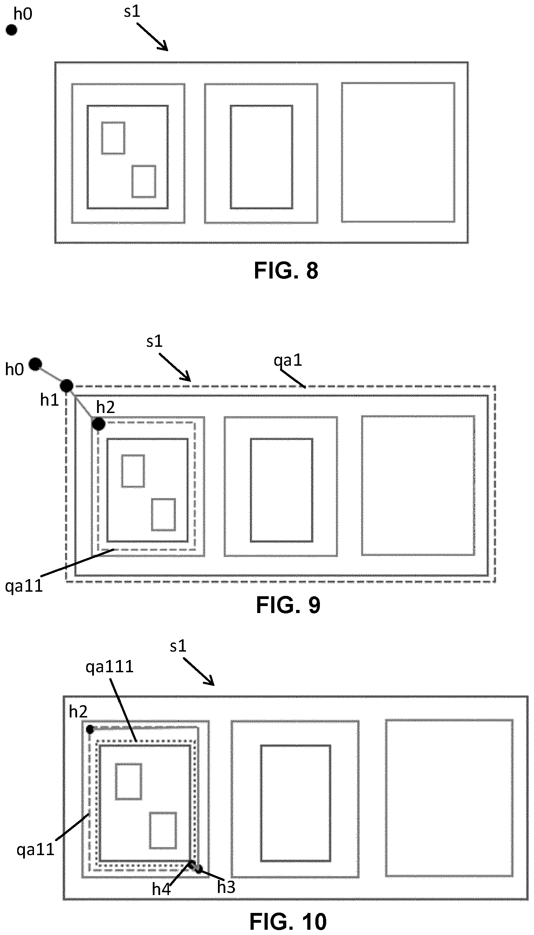

Figures 5 to 16 show examples of how the printing of parent-child polygons may be performed. Polygon q1, for example, is a polygon not having any parent polygon (i.e., a polygon that could be included in the slice of figures 2 and 4).

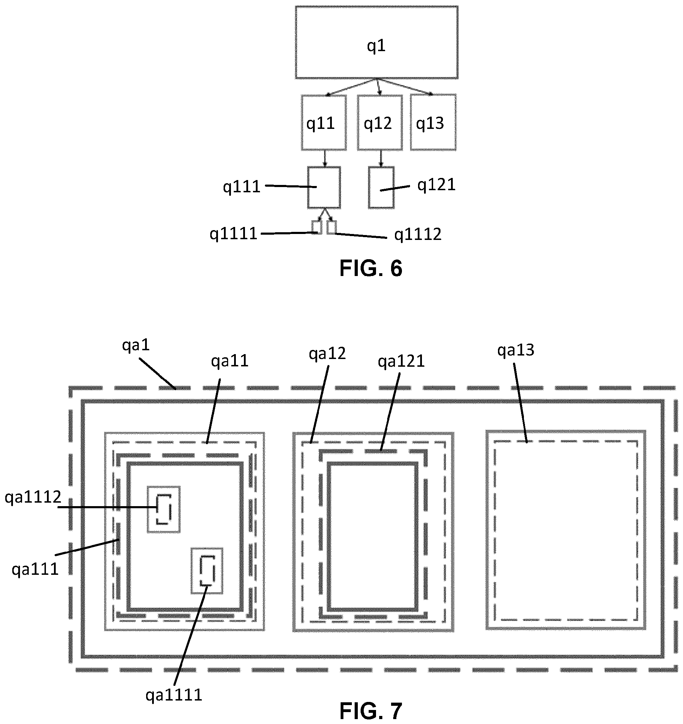

Figure 5 shows a slice s1 with polygons q1, q11, q12, q13, q111, q121, q1111, q1112 having relationship of parent-child-sibling. The relationship has been illustrated in figure 6. As shown in figure 2, polygon q1 is parent of polygons q11, q12, q13. Polygon q11 is parent of polygon q111. Polygon q12 is parent of polygon q121. Polygon q111 is parent of polygons q1111, q1112.

Figure 7 shows safe outlines of the polygons of the slice s1. External polygons have been depicted with wider continuous lines. Internal polygons have been depicted with narrower continuous lines. Safe outlines of external polygons have been depicted with wider discontinuous lines. Safe outlines of internal polygons have been depicted with narrower discontinuous lines.

In some embodiments, each safe outline of the safe outlines of the slice is closer to the polygon having the respective safe outline than to the rest of the polygons of the slice.

Polygon q1 is an external polygon and has a safe outline qa1 outside the polygon q1. Polygons q11, q12 and q13 are internal polygons and respectively have a safe outline qa11, qa12, qa13 inside the respective polygon q11, q12, q13. Polygons q111, q121 are external polygons and respectively have a safe outline qa111, qa121 outside the respective polygon q111, q121. Polygons q1111, q1112 are internal polygons and respectively have a safe outline qa1111, qa1112 inside the respective polygon q1111, q1112.

The method illustrated in figures 5 to 16 seek to determine the travel and deposition subpaths for the children of q11 from innermost polygons to outermost polygons in each branch depicted in figure 6.

As shown in figure 7, a determined location h0 of the printhead is set as initial location of the printhead. This location of the printhead may be independent of the polygons of the slice s1.

A closest vertex of the parentmost polygon (i.e., polygon q1) to h0 is determined. A travel subpath of the printhead begins in the location h0 and goes to a point h1 of the safe outline qa1 of the vertex of q1 closest to the location h0.

Since the polygon q1 has child polygons q11, q12, q13, it is determined which one of the children is closest to the vertex having h1 as point of the safe outline qa1. Subsequently, the travel subpath connects the point h1 to the child polygon q11.

Since the child polygon q11 is parent of a child polygon q111, the travel subpath subsequently connects the child polygon q11 to the point h2 of the safe outline qa11 of a vertex of the child polygon q11, the vertex of the child polygon q11 being closest to a vertex of polygon q1.

Then, since the vertex of polygon q11 having h2 as point of the safe outline qa11 is not the closest vertex to a vertex of child polygon q111, the travel subpath connects the point h2 along the safe outline qa11 to a point h3 of the safe outline qa111 of a vertex of the polygon q11 closest to a vertex of child polygon q111. Subsequently, the travel subpath connects the point h3 to a point h4 of the safe outline qa111 of the closest vertex of the polygon q111 to a vertex of q11.

Since child polygon q111 is parent of child polygons q1111, q1112, then it is determined which one of the child polygons q1111, q1112 is closest to the parent polygon q111, for example, by finding the child having the closest centroid to the closest vertex of the polygon q111 to a vertex of q11. In this example, the chilid polygon q1111 has the centroid closest to the closest vertex of the polygon q111 to a vertex of q11.

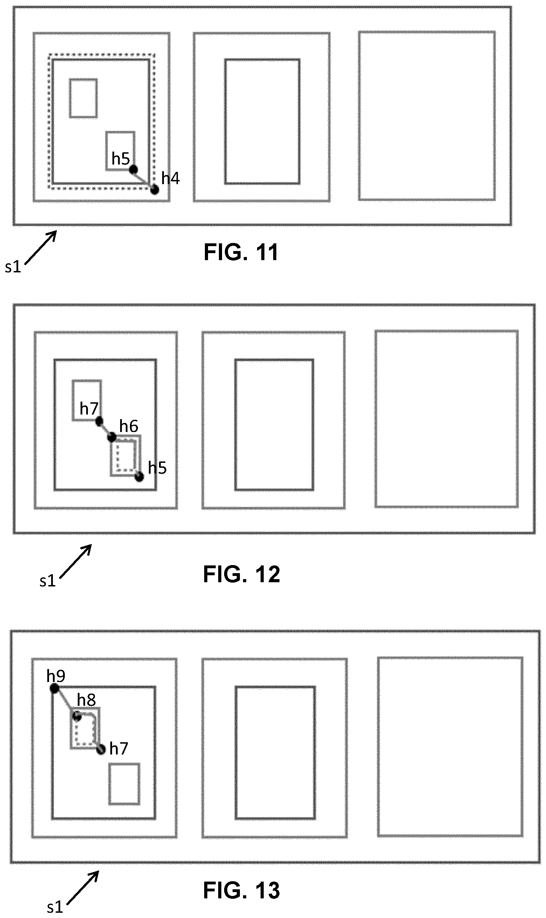

The closest vertex of child polygon q1111 to the parent polygon q111 is the vertex h5 (see figure 11). Since the vertex of the parent polygon q111 closest to the vertex h5 of the child polygon q1111 is the vertex having h4 as point of the safe outline qa111, it is not required that the travel subpath comprises a subpath along a safe outline of polygon q111 to approach to another vertex of polygon q111.

The travel subpath goes from h4 to the vertex h5 of polygon q1111. Since polygon q1111 does not have any child, the path is configured to comprise a deposition subpath having a shape matching the perimeter of the child polygon q1111 and to perform said deposition subpath subsequently to the travel subpath that ends at vertex h5.

Since polygon q1111 has one sibling polygon q1112, a subsequent travel subpath is determined for connecting the polygon q1111 to the sibling. It is determined which vertex of polygon q1111 is closest to a vertex of polygon q1112. Since the sibling polygons q1111, q1112 are internal polygons, the travel subpath starts in vertex h5 of polygon q1111 and goes along the safe outline qa1111 of the polygon q1111 to the closest vertex h6 of polygon q1111 to a vertex of polygon q1112. The travel subpath comprises a subpath that goes from h6 to the vertex h7 of polygon q1112 closest to a vertex of polygon q1111. Since polygon q1111 does not have any child, the path is configured to comprise a deposition subpath having a shape matching the perimeter of the child polygon q1112 and to perform said deposition subpath subsequently to the travel subpath that ends at vertex h7.

Since polygon q1112 does not have any sibling additional to polygon q1111, the path is configured to comprise a travel subpath connecting the polygon q1112 to the polygon q111. In particular, the travel subpath goes, along the safe outline qa1112, from vertex h7 to a point h8 of the safe outline of a closest vertex of the polygon q1112 to a vertex of polygon q111. The travel subpath goes from the point h8 to the closest vertex h9 of the polygon q111 to a vertex of polygon q1112.

The path is configured to comprise a deposition subpath matching the perimeter of the polygon q111 to be performed subsequently to arriving at the vertex h9.

Since the polygon q111 does not have any sibling polygon, the path is configured to comprise a travel subpath connecting the child polygon q111 to the parent polygon q11. Since the child polygon is an external polygon and the parent polygon q11 is an internal polygon, the travel subpath goes from a vertex h9 of the child polygon q111 to a vertex h12 of the parent polygon q11. In particular, the path goes from a vertex h9 at which the deposition subpath delimited by the child polygon q111 ends to a vertex h12 of polygon q11 closest to the vertex at which the deposition subpath delimited by the child ends. To do so, the travel subpath may go from the vertex h9 to a point h10 of the safe outline of the vertex h9, then from point h10 to a point h11 of a safe outline of the closest vertex of polygon q11 to vertex h9, and then from point h11 to the closest vertex h12 of polygon q11 to the vertex h9.

The path is configured to comprise a deposition subpath delimited by the parent polygon q11 to be performed subsequently to arriving at vertex h12 of polygon q11.

Since polygon q11 has more than one sibling polygon, it is determined which one of the sibling polygons is closest to polygon q11. The determination may be made according to a distance from a centroid of polygon q11 to the respective centroids of the polygons q12, q13. Since the centroid of sibling polygon q12 is closer to the centroid of polygon q11, the path is configured with a travel subpath connecting the polygon q11 with the sibling polygon q12. Said travel subpath begins at a vertex h12 of polygon q11 at which the deposition subpath delimited by polygon q11 ends, goes to a point of the safe outline of the vertex h12, then goes, along the safe outline qa11, to a safe outline h13 of a closest vertex of the polygon q11 to a vertex of the polygon q12; and the travel subpath goes from the safe outline h13 to a point of the sibling polygon q11.

Since the polygon q12 is a parent polygon of the child polygon q121, the travel subpath goes from the point of the sibling polygon q12 to a point h14 of the safe outline of the closest vertex of the polygon q12 to a vertex of the polygon q11. The travel subpath goes from the safe outline h14 of the polygon q12, along the safe outline of the polygon q12, to a point h15 of a safe outline of a closest vertex of the polygon q12 to a vertex of the polygon q121. The travel subpath goes from the point h15 to a point h16 of the safe outline of a closest vertex of the polygon q121 to a vertex of the polygon q12. The travel subpath goes from the point h16 to the vertex h17 of the polygon q121 having as safe outline the point h16.

The path is configured to comprise a deposition subpath delimited by the polygon q121 to be performed subsequently to arriving at the vertex h17.

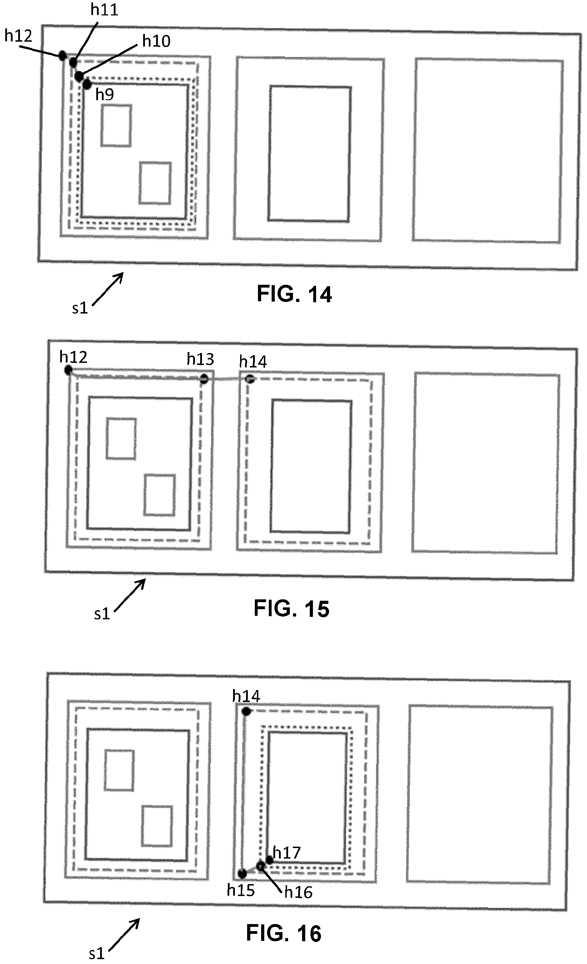

To print the deposition subpaths delimited by polygons q12, q13 and q1 the following subpaths (not depicted in figure 16) may be comprised by the determined path. A travel subpath that connects the child polygon q121 to the parent polygon q12. A subsequent deposition subpath delimited by the parent polygon q12. A subsequent travel subpath connecting the polygon q12 to the polygon q13. A subsequent deposition subpath delimited by the polygon q13. A subsequent travel subpath connecting the child polygon q13 to the parent polygon q1. A subsequent deposition subpath delimited by the parent polygon q1.

If a slice has one or more infills, for each infill of the one or more infills the following is performed:
∘ if the slice comprises a deposition of a boundary of an inner side of the infill, said boundary is deposited prior to performing a deposition subpath for depositing the infill; and
∘ if the slice comprises a deposition boundary of an outer side of the infill, said boundary is deposited after performing a deposition subpath for depositing the infill.

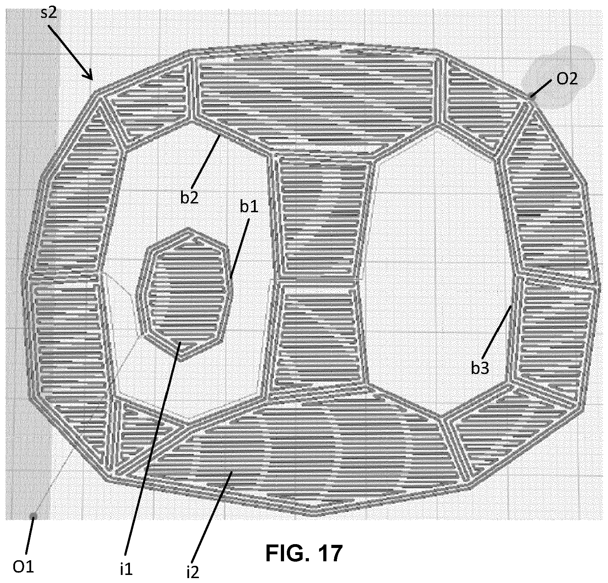

Following with the example of figure 17, infill i1 if firstly deposited, then boundary b1 of the outer side of the infill i1 is deposited, then boundary b2 of an inner side of the infill i2 is deposited, and then the boundary b3 of an inner side of the infill i2 is deposited. Subsequently, the infill i2 is deposited. Finally, the boundary of an outer side of the infill i2 is deposited. The travel subpaths are illustrated with a line that goes from point O1 to point 02.

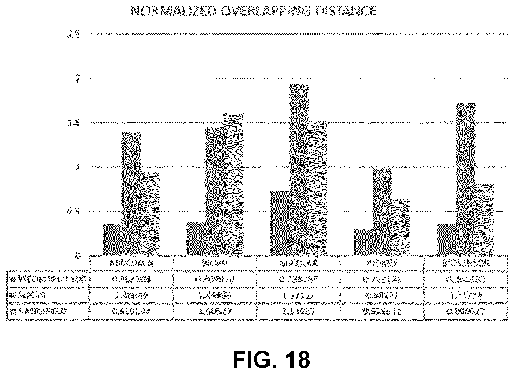

A comparison between a normalized overlapping distance (i.e., relationship between the total distance of the overlapping travel subpaths and the diagonal of a bounding box of the model) of the path obtained with the method of the present disclosure, the method of SLIC3R and the method of SIMPLIFY3D is shown in figure 18. The comparison is performed for different 3-D objects to be printed, in particular, an abdomen, a brain, a maxilar, a kidney and a biosensor. A shown in figure 18, the method of the present disclosure outperforms the other two methods.

In this text, the term "comprises" and its derivations (such as "comprising", etc.) should not be understood in an excluding sense, that is, these terms should not be interpreted as excluding the possibility that what is described and defined may include further elements, steps, etc.

On the other hand, the disclosure is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A computer-implemented method for determining paths for 3-D printing, by extrusion of semisolid material, slices of a 3-D model, and for transforming the determined paths into instructions; the instructions being executable by a 3-D printer for extruding semisolid material; the method comprising performing the following for each slice of the slices of the 3-D model:
- receiving polygons (p1, q1, q11) defining boundaries of 3-D portions of the slice of the 3D-model;
- classifying the received polygons as parent and child, wherein a polygon is classified as parent polygon of a child polygon if any one of the following conditions is met:
∘ the parent polygon (q1) encloses the child polygon (q11), and there is only one received polygon enclosing the child polygon; and
∘ there is more than one received polygon enclosing the child polygon (q1111), the parent polygon (q111) encloses the child polygon (q1111) and the parent polygon has less area than the remaining received polygon(s) (q11) enclosing the child polygon;
- determining a path for 3-D printing the slice, the path comprising deposition subpaths (i1, i2, p1) delimited by the polygons, and the path comprising travel subpaths, each travel subpath of the travel subtpaths connecting an end of a deposition subpath to a beginning of another deposition subpath or connecting an initial location of a printhead to a beginning of an initial deposition subpath of the deposition subpaths; the step of determining the path comprising:
∘ for each parent polygon: configuring the path to perform the deposition subpath(s) delimited by the child(ren) (q111) of the parent polygon (q11), and to perform the deposition subpath delimited by the parent polygon after performing the deposition subpath(s) delimited by the child(ren) and before performing any other deposition subpath of the deposition subpaths not yet performed according to the path; and
∘ minimizing a sum of lengths of intersections of the travel subpaths with the 3-D portions of the slice.

2. The method of claim 1, the step of determining the path for 3-D printing further comprises a restriction wherein at least one of:
- the path only passes once along a perimeter of each polygon of the polygons; and
- a sum of a length of each travel subpath of the travel subpaths is minimized.

3. The method of any one of the previous claims, wherein the receiving polygons comprise polygons (p1) not having any parent polygon, and the step of determining the path comprises ordering the deposition subpaths delimited by the polygons not having any parent polygon, wherein the ordering comprises:
- calculating a centroid (cp1) of each polygon of the polygons (p1) not having any parent polygon,
- obtaining the order by applying a nearest neighbor algorithm to the centroids (cp1) and to an initial location of a printhead (h0).

4. The method of any one of the previous claims, wherein the step of determining the path has a restriction wherein each travel subpath between two deposition subpaths starts at a vertex of the polygon (p1) delimiting one of the deposition subpaths, ends at a vertex of the polygon (p2) delimiting the other deposition subpath and, upon the start vertex of the travel subpath not being the closest vertex to the polygon (p2) delimiting the other deposition subpath, goes along a safe outline (pa1) of the start polygon from the point of the safe outline of the start vertex to a point of a safe outline of the closest vertex of the start polygon (p1).

5. The method of claim 4, wherein the safe outline (qa1) of a polygon delimiting, in an outer manner with respect to an infill, the infill is outside of the polygon (q1), and wherein the safe outline (qa11) of a polygon (q11) delimiting, in an outer manner with respect to a void, the void is inside of the polygon (q11).

6. The method of any one of the previous claims, wherein the step of determining the path comprises determining a travel subpath connecting two polygons having a same parent polygon or two polygons not having any parent polygon, wherein the step of determining the travel subpath connecting the two polygons comprises detecting that a minimized subpath between the two polygons (4, 5) passes through a third polygon (2) of the received polygons other than the two polygons and, upon detecting that the minimized subpath passes through the third polygon, defining a travel subpath connecting the two polygons and passing along a safe outline (2a) of the third polygon (2).

7. The method of any one of the previous claims, the step of determining the path comprising configuring, for a polygon of the polygons not having any parent polygon and being a parent polygon of at least one of the polygons, a travel subpath of the path by:
a) choosing a child polygon (q11) of the parent polygon (q1), wherein if the parent polygon has more than one child polygon, the chosen child polygon has a centroid closest to a determined location point (h0) of a printhead;
b) adding, to the travel subpath, a subpath connecting the location point (h0) of a printhead to a point (h1) of a safe outline (qa1) of the parent polygon, and connecting the point (h1) of the safe outline of the parent polygon to a point (h2) of the chosen child polygon;
c) upon determining that the latest chosen child polygon (q13) is not a parent polygon, not adding more subpaths to the travel subpath; upon determining that the latest chosen child polygon (q11) is a parent polygon:
d) assigning the status of parent polygon to the latest chosen child polygon, assigning the status of location point of a printhead to the point of the chosen child polygon in b) and performing a);
e) adding, to the travel subpath, a subpath connecting the point of the chosen child polygon in b) to a point of a safe outline of the parent polygon, and connecting the point of the safe outline of the parent polygon to a point of a safe outline of the latest chosen child polygon (q121, q111), and connecting the point of a safe outline of the latest chosen child polygon to a point of the latest chosen child polygon; and
f) upon determining that the latest chosen child polygon (q121) is not a parent polygon, not adding more subpaths to the travel subpath; upon determining that the latest chosen child polygon (q111) is a parent polygon: repeating a), b) and c), wherein the status of parent polygon is assigned to the latest chosen child polygon, and the status of location point (pₕ) of a printhead is assigned to the point of the latest chosen child polygon of e);
wherein in b), if the location point of a printhead is a point of a safe outline of the parent polygon, not performing the addition of a subpath connecting the location point of a printhead to a point of a safe outline of the parent polygon.

8. The method of any one of the previous claims, wherein at least two of the polygons are sibling polygons (q11, q12); wherein the polygon(s) (q1) not having any parent polygon is/are external polygon(s), the child(ren) of external polygon(s) is/are internal polygon(s), and the child(ren) of internal polygons are external polygons; the method comprising configuring, for a determined polygon having at least one sibling polygon, a travel subpath of the path by:
choosing a sibling polygon (q12) of the determined polygon (q11) to be printed earlier than the chosen sibling polygon, wherein if the determined polygon has more than one sibling polygon, the chosen sibling polygon has a centroid closest to the determined polygon; and
if the chosen sibling is an external polygon, adding, to the travel subpath, a subpath connecting a point of the determined polygon (q11) to a point of a safe outline (qa11) of the determined polygon, connecting the point of the safe outline (qa11) of the determined polygon to a point of a safe outline (qa12) of the sibling polygon, and connecting the point of the safe outline of the sibling polygon to a point of the sibling polygon; and
if the chosen sibling (q1112) is an internal polygon, adding, to the travel subpath, a subpath connecting a point of the determined polygon (q1111) to a point of a safe outline (qa1111) of the determined polygon, and connecting the point of the safe outline of the determined polygon to a point of the sibling polygon (q1112).

9. The method of any one of the previous claims, wherein the polygon(s) not having any parent polygon is/are external polygon(s), the child(ren) of external polygon(s) is/are internal polygons, and the child(ren) of internal polygon(s) is/are external polygon(s); the step of determining the path comprising configuring, for a child polygon of the polygons not having any child polygon nor any sibling polygon, a travel subpath of the path by:
if the child polygon (q111) is an external polygon, adding, to the travel subpath, a subpath connecting a point of the child polygon (q111) to a point of a safe outline (qa111) of the child polygon, connecting the point of the safe outline of the child polygon to a point of a safe outline (qa11) of the parent polygon, connecting the point of the safe outline of the parent polygon to a point of the parent polygon (q11); and
if the child polygon (q1112) is an internal polygon, adding, to the travel subpath, a subpath connecting a point of the child polygon (q1112) to a point of a safe outline (qa1112) of the child polygon, and connecting the point of the safe outline of the child polygon to a point of the parent polygon (q111).

10. The method of any one of the previous claims, wherein the step of determining the path comprises defining at least one of the deposition subpaths being an infill subpath for printing an infill delimited at an inner side by a polygon of the polygons and delimited at an outer side by another polygon of the polygons, wherein the infill subpath starts and ends at a same point closer to the polygon delimiting the inner side than to the polygon delimiting the outer side.

11. The method of claim 10, wherein the step of determining the path comprises including, in the path, a deposition subpath for printing the polygon delimiting the outer side of the infill, and configuring the path to perform the deposition subpath of the polygon delimiting the outer side of the infill after performing the deposition subpath of the infill and before performing any other subsequent deposition subpath.

12. The method of claim 10, wherein the paths do not comprise any deposition subpath for printing a polygon delimiting the infill.

13. A computer program product that has instructions which, when the program is executed by at least one computing device, cause the at least one computing device to carry out the method of any one of the previous claims.

14. An extrusion-based 3-D printer configured to extrude semisolid material, the extrusion-based 3-D printer being configured to execute the instructions obtained according to any one of claims 1 to 12 for performing the paths determined according to any one of claims 1 to 12.
